# EUROPEAN PATENT SPECIFICATION

(11) **EP 2 875 923 B1**
(45) Date of publication and mention of the grant of the patent: **17.08.2016**
(21) Application number: 14191290.7
(22) Date of filing: 31.10.2014
(51) Int. Cl.: B27M 1/08, B27B 27/10, B27M 3/00, B23Q 3/06, B23Q 1/52, B23Q 1/01

(54) **Machine for machining walls, particularly for walls made of wood or multilayer walls and the like**
Maschine zur Bearbeitung von Wänden, insbesondere für Wände aus Holz oder mehrlagige Wände und dergleichen
Machine d'usinage pour parois, en particulier pour des parois en bois ou parois multicouche et analogues

(30) Priority: 20.11.2013 IT PD20130316
(43) Date of publication of application: 27.05.2015
(73) Proprietor: Essetre Holding SpA, 36016 Thiene (VI) (IT)
(72) Inventor: Pasquale, Enrico, 36040 GRUMOLO DELLE ABBADESSE VI (IT)
(74) Representative: Modiano, Micaela Nadia

(56) References cited:
- DE-A1- 3 925 469
- FR-A1- 2 892 960
- US-A1- 2002 020 054

## Description

The present invention relates to a machine for machining walls according to the preamble of claim 1. Such a machine is known from document FR 2 892 960.

Nowadays, in the field of prefabricated structures for the construction of buildings, the practice is known and increasingly widespread of setting up prefabricated walls that are constituted for example by one or more superimposed layers of wooden material.

Such structures meet the need that is increasingly felt by operators in the sector to offer structures in the manufacture of which materials of natural origin are used.

For the machining of such walls, nowadays use is generally made of "mobile portal" machines, which are equipped with a milling head with "five axes", i.e. they comprise a portal that can perform a translational motion along a first axis X, longitudinal and parallel to the working surface, with a tool-holder carriage that performs a translational motion along a second axis Y which is transverse to the first axis X, and a further carriage that can perform a translational motion along a third axis Z, vertical, which supports a bi-rotary head, rotateable about two axes, which in turn comprises an electric spindle for holding a milling cutter; the electric spindle is associated with an automatic tool-changing device.

Such a mobile portal is arranged so as to slide on adapted sliding guides with respect to a working surface.

The working surface can be used to support, for example, preassembled walls, or a wall can be assembled on it, known as a frame wall, which is constituted by a first layer which is a panel of OSB (Oriented Strand Board), a second layer of beams, and a third layer of OSB.

Obviously the walls need to be machined on both sides.

At present, working with a mobile portal machine as described also requires that there be one or two auxiliary lateral carriages, which are necessary in order to overturn the wall being machined, so that both one side and the opposite side of a same wall can be machined.

A first carriage moves transversely and serves exclusively to perform the turning over, while a second carriage moves longitudinally, carries the panel being machined below the portal carrying the milling or cutting heads, and finally is arranged in place of the first carriage, which moves to one side, and the turning over of the panel begins by way of the rotation of the resting surfaces of the carriages to face each other in order to execute the passage, with turning over of the panel, from one carriage to the other.

Such first and second carriages each move on corresponding guide rails that are cheaply made with drawn iron plates, which result in a sliding with scant precision, with low speeds and acceleration owing to the slipping of the wheels of the carriages on the iron plates that define the guide rails.

Furthermore, the guide rails intersect by superimposition, thus making it impossible for one of the two carriages to continue the stroke in its direction of motion, with consequent general limitations on the management of machined panels or panels being machined.

The aim of the present invention is to provide a machine for machining walls, particularly for walls made of wood or multilayer walls and the like, which is capable of overcoming the limitations of conventional machines for machining walls.

Within this aim, an object of the invention is to devise a machine for machining walls with no auxiliary lateral carriages for the overturning of a wall being machined.

Another object of the invention is to devise a machine that is more compact overall, it being possible to do without the lateral encumbrances of auxiliary carriages for turning over the wall being machined.

Another object of the invention is thus to devise a machine for machining walls which is faster and more precise with respect to conventional machines.

This aim and these and other objects which will become better evident hereinafter are achieved by a machine for machining walls, particularly for walls made of wood or multilayer walls and the like, comprising a portal with one or more working heads, and a working surface for resting a wall to be machined, said portal and said working surface being configured for the movement of one with respect to the other, said machine for machining walls being characterized in that said working surface comprises a first and second opposite support and movement frames, both provided with means for translation and rotation with respect to a fixed base frame and configured so as to allow each support and movement frame to provide the following configurations:
- a lowered, substantially horizontal configuration for machining a wall;
- an inclined configuration that faces the other, opposite support and movement frame for turning over a wall supported by said first support and movement frame onto said second, opposite support and movement frame.

Further characteristics and advantages of the invention will become better apparent from the detailed description that follows of a preferred, but not exclusive, embodiment of the machine for machining walls, particularly for walls made of wood or multilayer walls and the like, according to the invention, which is illustrated by way of non-limiting example in the accompanying drawings, wherein:

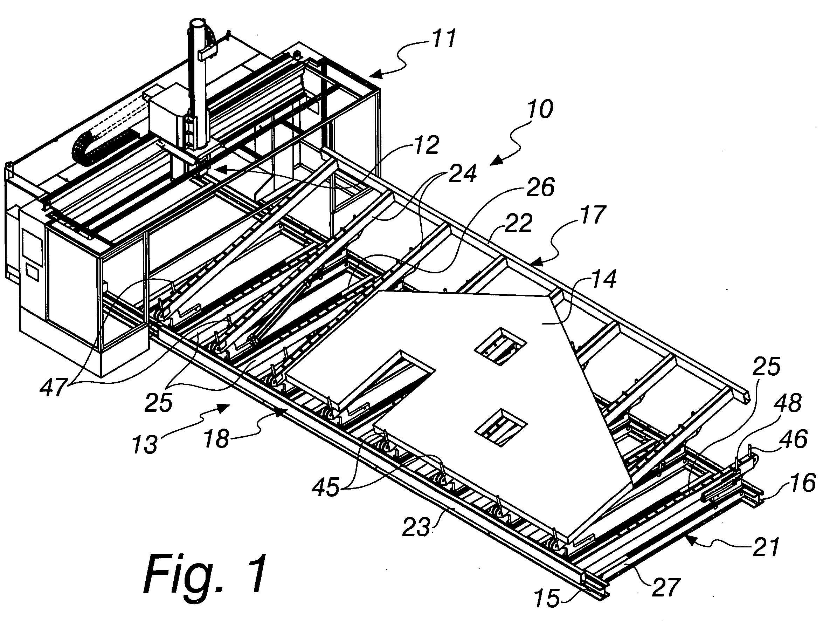

- Figure 1 is a perspective view of a machine according to the invention;
- Figure 2 is an exploded perspective view of the means for translation and rotation of the machine according to the invention;
- Figure 3 shows the exploded components in Figure 2 assembled;
- Figure 4 is a view from above of a portion of a working surface of a machine according to the invention;
- Figure 5 is a cross-sectional view taken along the line V-V in Figure 4;
- Figure 6 is a cross-sectional view taken along the line VI-VI in Figure 4;
- Figures 7 to 11 each show a step of using the machine according to the invention.

With reference to the figures, a machine for machining walls, particularly for walls made of wood or multilayer walls and the like, according to the invention, is generally designated with the reference numeral 10.

The machine 10 comprises a portal 11, with one or more working heads 12, and a working surface 13 for resting a wall to be machined 14.

The portal 11 and the working surface 13 are configured for the movement of one with respect to the other, for example, but not exclusively, the portal 11 is of the mobile type, i.e. it is configured to slide on guide rails 15 and 16.

The machine 10 for machining walls has the peculiarity that the working surface 13 comprises a first and second opposite support and movement frames 17 and 18, both provided with means for translation and rotation, 19 and 20 respectively, with respect to a base frame 21, which is fixed to the ground.

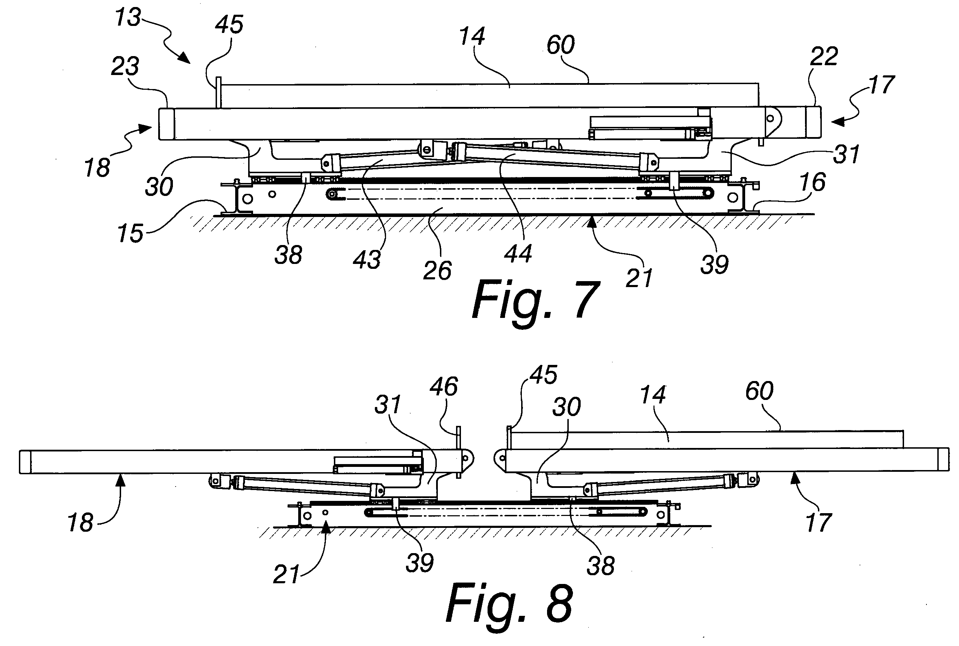

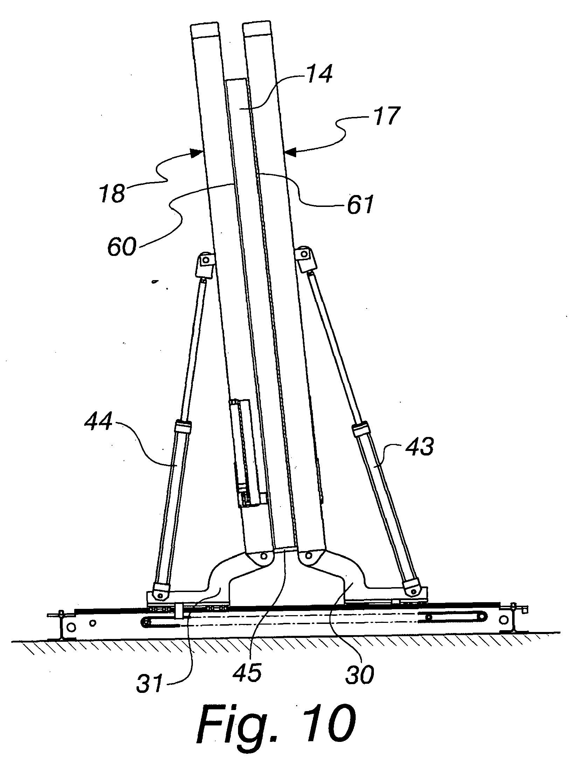

The translation and rotation means, 19 and 20, better described hereinbelow, are configured so as to allow each support and movement frame 17 and 18 to provide the following configurations:
- a lowered, substantially horizontal configuration for machining a wall 14, such as for example the one shown in Figure 7,
- an inclined configuration that faces the other, opposite support and movement frame for turning over a wall 14 supported by the first support and movement frame 17 onto the second, opposite support and movement frame 18, as in Figure 10.

Each of the two frames 17 and 18 is substantially comb-shaped, with a longitudinal bar 22 and 23 respectively, and a plurality of crossmembers 24 and 25, which are fixed at right angles to the respective longitudinal bar.

The two frames 17 and 18 are arranged so that longitudinally, one encounters a crossmember 24 of a first frame 17 and a crossmember 25 of the second frame 18 alternately.

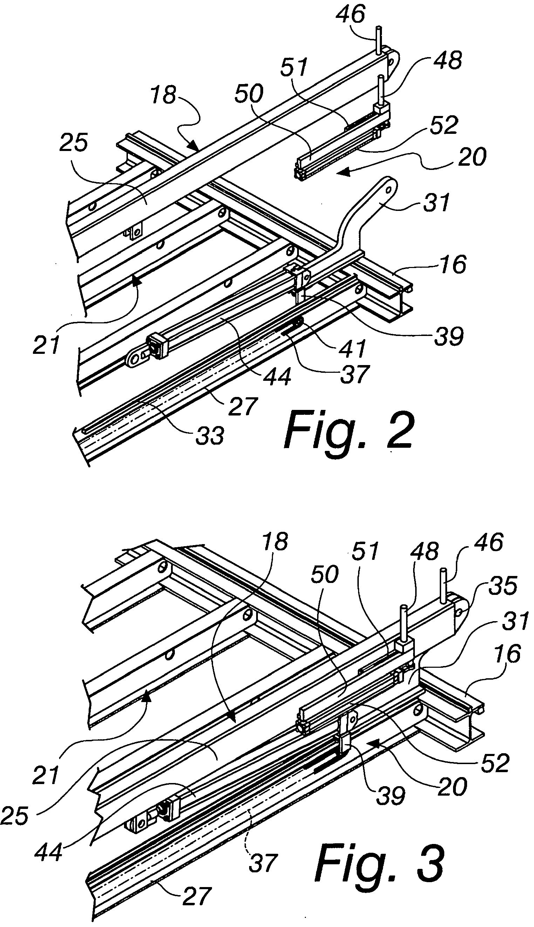

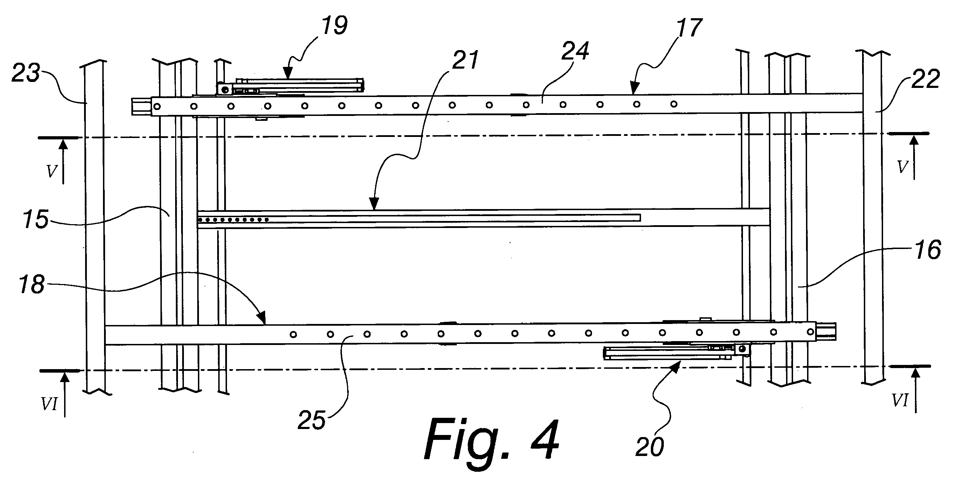

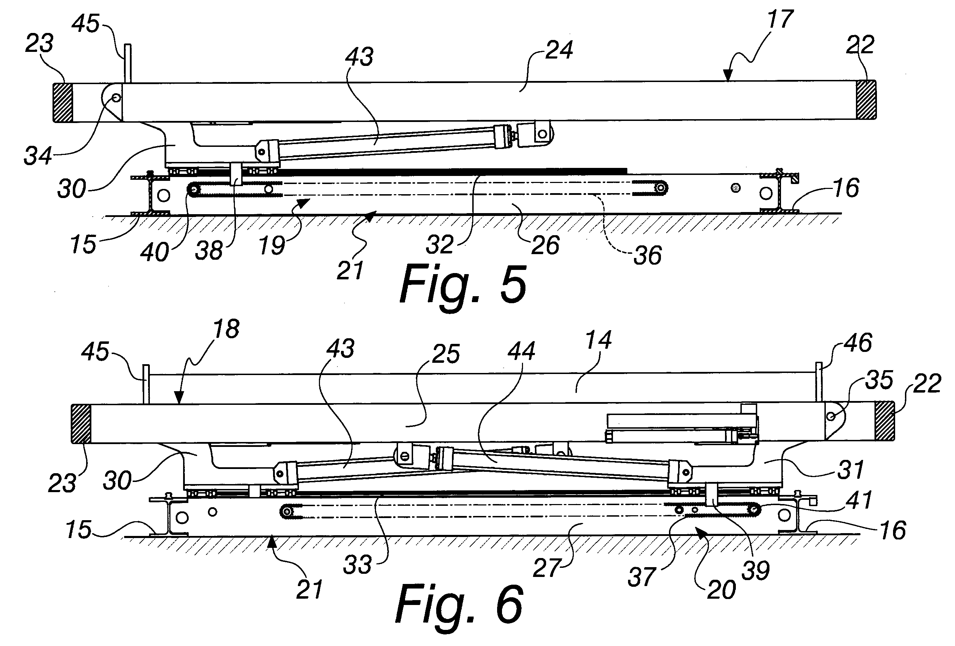

The translation and rotation means, 19 and 20, clearly visible in Figures 2 to 6, provide for each frame 17 and 18 at least two translation and rotation units, which are applied to respective spaced crossmembers of the corresponding frame.

The translation and rotation means 19 and 20 are interposed between a crossmember, for example a crossmember 25 of the second frame 18 in Figures 2 and 3, and a corresponding underlying crossmember 26 and 27 of the base frame 21.

The translation and rotation means 19 and 20 comprise a slider 30 and 31 that is arranged so as to slide on a guide 32 and 33 that is arranged above the corresponding crossmember 26 or 27 of the base frame 21; the corresponding crossmember 24 and 25 of the support and movement frame 17 and 18 is pivoted, with fulcrum 34 and 35, to the slider 30 and 31.

The linear guide system 32 and 33 and the fulcrum of rotation 34 and 35 are present on all the crossmembers 24 and 25 of the two frames 17 and 18, while the translation and rotation means 19 and 20 are present only at a limited number of crossmembers, for example two crossmembers for each frame 17 and 18.

The slider 30 and 31 is moved with respect to its guide 32 and 33 by way of pusher or traction means, for example by way of a chain transmission 36 and 37, such chain 36 and 37 being coupled to the slider 30 and 31 by way of a bracket 38 and 39.

The chain 36 and 37 is actuated by a pinion 40 and 41 that is keyed on a driving shaft that is extended longitudinally to the direction of extension of the working surface 13 and actuates simultaneously all the chains 36 and 37 related to a same frame 17 and 18 by way of corresponding pinions.

The movement of the slider 30 and 31, by way of the motion of the chains, is provided by a gear motor, which is not shown for the sake of simplicity and should be understood as being of conventional type, which actuates the driving shaft on which are keyed the pinions that entrain the chain on which the bracket 38 and 39 respectively is fixed.

As an alternative to using a chain system, it should be understood that equivalently, a linear actuator, of the cylinder/piston type, or other, electric linear actuator, which should be understood as being of known type, can be used.

The translation and rotation means 19 and 20 comprise, for the provision of the rotation, a linear actuator 43 and 44 that is interposed between the slider 30 and 31 and the corresponding crossmember of the support frame 24 and 25.

The linear actuator 43 and 44 is constituted by a fluid-operated actuation cylinder, hydraulic or pneumatic, or by an actuator with electric motorization, or by another, equivalent linear actuator.

The wall 14 being machined is kept in position on the frames 17 and 18 by way of fixed abutments 45 and 46, which are fixed at the ends respectively of the crossmembers 24 and 25 of the two frames 17 and 18, and movable abutments 47 and 48.

The movable abutments, for example 48 in Figures 2 and 3, are supported by a slider 50 that is adapted to slide on a guide 51 that is fixed to the crossmember 25 of the second frame 18, and similarly to a crossmember 24 of the first frame 17; the slider is moved by a linear actuator 52, which is embodied for example in a fluid-operated actuation cylinder/piston.

The abutments, both fixed and mobile, are preferably retractable, i.e. they can be actuated in translational movement along their axis so as to retract below the resting surface of the corresponding crossmember with which they are associated.

Operation of the machine 10 according to the invention is the following.

In Figure 7 the working surface 13 is in the lowered configuration for machining for a wall 14 placed thereon with a first side 60 directed upwardly.

For turning over the wall 14, in a first step, which is governed by an electronic control unit that manages and coordinates the sequence of steps using the various movement motors for translational motion chains 36 and 37 and linear actuators for rotation 43 and 44, the two frames 17 and 18 retreat laterally outwardly with respect to the base frame 21 as in Figure 8, with the wall, resting on the abutments, for example the fixed abutments 45, remaining on the first frame 17.

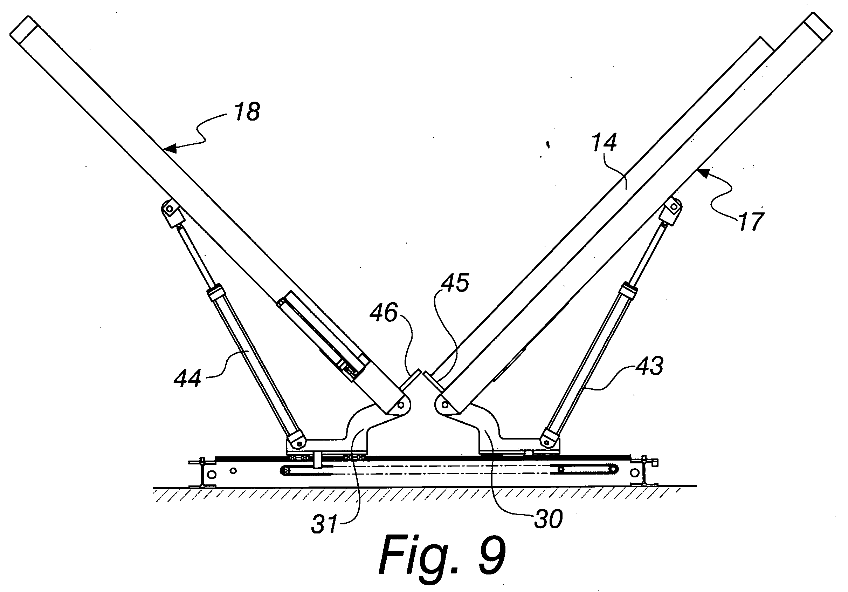

Subsequently, or at the same time as the lateral retraction, the frames 17 and 18 rotate, pushed by the linear actuators 43 and 44, as in Figure 9, in order to face each other as in Figure 10.

The configuration in Figure 10 is when the passage occurs of the wall 14 from the first frame 17 to the second frame 18, with the wall 14 that rests downwardly on the abutments 45 and 46 both of the first frame 17 and of the second frame 18, and with the first side 60 of the wall 14 resting on the second frame 18.

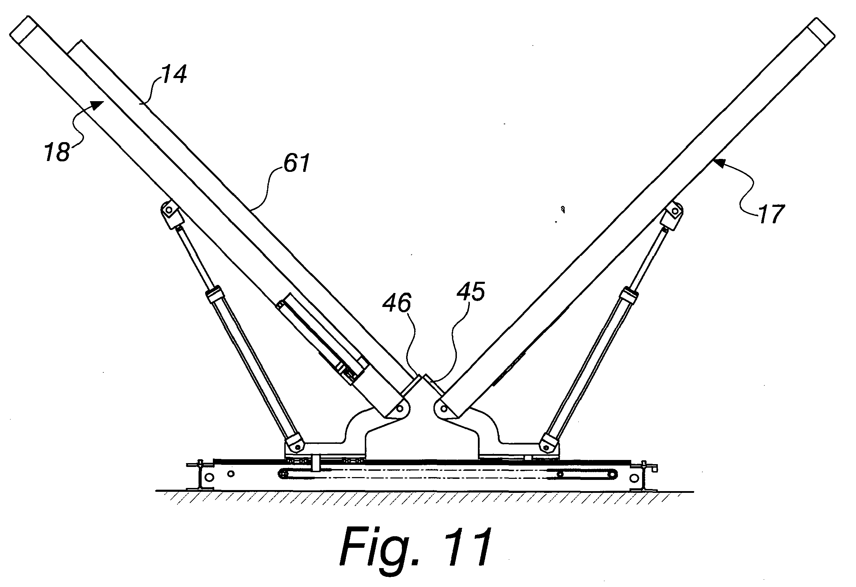

Figure 11 shows an example of a configuration of descent of the two frames 17 and 18 with the wall 14 now carried, turned over, by the second frame 18, thus with the second side 61 of the wall 14 directed upwardly and available for machining after the descent.

It should be understood that the portal 11 can be of known type, for example a mobile portal with a milling head with "five axes", i.e. comprising a portal that can perform a translational motion along a first axis X, longitudinal and parallel to the working surface, with a tool-holder carriage that performs a translational motion along a second axis Y which is transverse to the first axis X, and a further carriage that can perform a translational motion along a third axis Z, vertical, which supports a bi-rotary head, rotateable about two axes, which in turn comprises an electric spindle for holding a milling cutter; the electric spindle is associated with an automatic tool-changing device.

In practice it has been found that the invention fully achieves the intended aim and objects.

In particular, with the invention, a machine for machining walls has been devised with no auxiliary lateral carriages for the overturning of a wall being machined, thanks to the presence of the two opposite frames 17 and 18 and of the corresponding translation and rotation means 19 and 20 which make possible the described movement thereof.

What is more, with the invention, a machine has been devised that is more compact overall, it being possible to do without the lateral encumbrances of auxiliary carriages for turning over the wall being machined.

Thus, with the invention, a machine for machining walls has been devised which is faster and more precise with respect to conventional machines.

The invention thus conceived is susceptible of numerous modifications and variations, all of which are within the scope of the appended claims. Moreover, all the details may be substituted by other, technically equivalent elements.

In practice the devices and the components employed, provided they are compatible with the specific use, and the contingent dimensions and shapes, may be any according to requirements and to the state of the art.

The disclosures in Italian Patent Application No. PD2013A000316 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A machine (10) for machining walls, particularly for walls made of wood or multilayer walls and the like, comprising a portal (11) with one or more working heads (12), and a working surface (13) for resting a wall (14) to be machined, said portal (11) and said working surface (13) being configured for the movement of one with respect to the other, said machine for machining walls being **characterized in that** said working surface (13) comprises a first and second opposite support and movement frames (17, 18), both provided with means for translation and rotation (19, 20) with respect to a fixed base frame (21) and configured so as to allow each support and movement frame (17, 18) to provide the following configurations:
- a lowered substantially horizontal configuration for machining a wall (14),
- an inclined configuration that faces the other opposite support and movement frame (17, 18) for turning over a wall (14) supported by said first support and movement frame (17) onto said second opposite support and movement frame (18).

2. The machine according to claim 1, **characterized in that** each one of the two frames (17, 18) is substantially comb-shaped, with a longitudinal bar (22, 23) and a plurality of crossmembers (24, 25), which are fixed at right angles to the respective longitudinal bar.

3. The machine according to one or more of the preceding claims, **characterized in that** said translation and rotation means (19, 20) provide for each frame (17, 18) at least two translation and rotation units, which are applied to respective spaced crossmembers of the corresponding frame.

4. The machine according to one or more of the preceding claims, **characterized in that** said translation and rotation means (19, 20) are interposed between a crossmember (24, 25) of the corresponding frame (17, 18) and a corresponding underlying crossmember (26, 27) of the base frame (21).

5. The machine according to one or more of the preceding claims, **characterized in that** said translation and rotation means (19, 20) comprise a slider (30, 31) that is arranged so as to slide on a guide (32, 33) arranged above the corresponding crossmember (26, 27) of the base frame (21), the corresponding crossmember (24, 25) of the support and movement frame (17, 18) being pivoted to the slider (30, 31).

6. The machine according to the preceding claims, **characterized in that** said slider (30, 31) is moved with respect to its guide (32, 33) by way of pusher or traction means.

7. The machine according to one or more of the preceding claims, **characterized in that** said pusher or traction means are provided by way of a chain transmission (36, 37), said chain (36, 37) being coupled to the slider (30, 31) by way of a bracket (38, 39).

8. The machine according to one or more of the preceding claims, **characterized in that** said chain (36, 37) is actuated by a pinion (40, 41) that is keyed on a driving shaft that is extended longitudinally to the direction of extension of the working surface (13) and actuates simultaneously all the chains (36, 37) related to a same frame (17, 18) by way of corresponding pinions.

9. The machine according to one or more of the preceding claims, **characterized in that** said translation and rotation means (19, 20) comprise, for the provision of the rotation, a linear actuator (43, 44) that is interposed between the slider (30, 31) and the corresponding crossmember of the support frame (24, 25).

10. The machine according to one or more of the preceding claims, **characterized in that** said wall (14) being machined is kept in position on the frames (17, 18) by way of fixed abutments (45, 46), which are fixed at the ends respectively of the crossmembers (24, 25) of the two frames (17, 18), and movable abutments (47, 48).

## Patentansprüche

1. Eine Maschine (10) zur Bearbeitung von Wänden, insbesondere für Wände aus Holz oder mehrlagige Wände und dergleichen, die ein Portal (11) mit einem oder mehreren Bearbeitungsköpfen (12) und eine Arbeitsoberfläche (13) zum Aufliegen einer zu bearbeitenden Wand (14) umfasst, wobei das Portal (11) und die Arbeitsoberfläche (13) für die Bewegung im Verhältnis zueinander konfiguriert sind, wobei die Maschine zur Bearbeitung von Wänden **dadurch gekennzeichnet ist, dass** die Arbeitsoberfläche (13) einen ersten und einen zweiten gegenüberliegenden Stütz- und Bewegungsrahmen (17, 18) umfasst, beide ausgestattet mit Mitteln für Translation und Drehung (19, 20) im Verhältnis zu einem festen Grundrahmen (21) und konfiguriert, um es jedem Stütz- und Bewegungsrahmen (17, 18) zu ermöglichen, folgende Konfigurationen bereitzustellen:
- eine abgesenkte im Wesentlichen horizontale Konfiguration zum Bearbeiten einer Wand (14),
- eine schräge Konfiguration, die dem anderen, gegenüberliegenden Stütz- und Bewegungsrahmen (17, 18) zugewandt ist, um eine Wand (14), die von dem ersten Stütz- und Bewegungsrahmen (17) getragen wird, an den zweiten, gegenüberliegenden Stütz- und Bewegungsrahmen (18) hinüberzuwenden.

2. Die Maschine gemäß Anspruch 1, **dadurch gekennzeichnet, dass** jeder der beiden Rahmen (17, 18) im Wesentlichen kammförmig ist, mit einer länglichen Stange (22, 23) und einer Vielzahl von Querträgern (24, 25), die in rechten Winkeln zur entsprechenden länglichen Stange befestigt sind.

3. Die Maschine gemäß einem oder mehreren der obigen Ansprüche, **dadurch gekennzeichnet, dass** die Translations- und Rotationsmittel (19, 20) für jeden Rahmen (17, 18) mindestens zwei Translations- und Rotationseinheiten bereitstellen, die auf entsprechende beabstandete Querträger des jeweiligen Rahmens angewandt werden.

4. Die Maschine gemäß einem oder mehreren der obigen Ansprüche, **dadurch gekennzeichnet, dass** die Translations- und Rotationsmittel (19, 20) zwischen einem Querträger (24, 25) des entsprechenden Rahmens (17, 18) und einem entsprechenden darunter liegenden Querträger (26, 27) des Grundrahmens (21) angeordnet sind.

5. Die Maschine gemäß einem oder mehreren der obigen Ansprüche, **dadurch gekennzeichnet, dass** die Translations- und Rotationsmittel (19, 20) einen Gleitreiter (30, 31) umfassen, der angeordnet ist, um auf einer Führung (32, 33) zu gleiten, welche oberhalb des entsprechenden Querträgers (26, 27) des Grundrahmens (21) angeordnet ist, wobei der entsprechende Querträger (24, 25) des Stütz- und Bewegungsrahmens (17, 18) drehgelenkig mit dem Gleitreiter (30, 31) verbunden ist.

6. Die Maschine gemäß den obigen Ansprüchen, **dadurch gekennzeichnet, dass** der Gleitreiter (30, 31) im Verhältnis zu seiner Führung (32, 33) durch Schub- oder Zugmittel bewegt wird.

7. Die Maschine gemäß einem oder mehreren der obigen Ansprüche, **dadurch gekennzeichnet, dass** die Schub- oder Zugmittel mit Hilfe einer Kettenübertragung (36, 37) bereitgestellt werden, wobei die Kette (36, 37) über eine Klammer (38, 39) mit dem Gleitreiter (30, 31) gekoppelt ist.

8. Die Maschine gemäß einem oder mehreren der obigen Ansprüche, **dadurch gekennzeichnet, dass** die Kette (36, 37) von einem Ritzel (40, 41) angetrieben wird, das auf einer Antriebswelle verkeilt ist, welche in Längsrichtung zur Erstreckungsrichtung der Arbeitsoberfläche (13) verlängert ist und über entsprechende Ritzel gleichzeitig alle Ketten (36, 37) antreibt, die zu einem selben Rahmen (17, 18) gehören.

9. Die Maschine gemäß einem oder mehreren der obigen Ansprüche, **dadurch gekennzeichnet, dass** die Translations- und Rotationsmittel (19, 20) zur Ermöglichung der Drehung einen Linear-Aktuator (43, 44) umfassen, der zwischen dem Gleitreiter (30, 31) und dem entsprechenden Querträger des Stützrahmens (24, 25) angeordnet ist.

10. Die Maschine gemäß einem oder mehreren der obigen Ansprüche, **dadurch gekennzeichnet, dass** die Wand (14), die bearbeitet wird, durch feste Widerlager (45, 46), die entsprechend an den Enden der Querträger (24, 25) der beiden Rahmen (17, 18) befestigt sind, und bewegliche Widerlager (47, 48) auf den beiden Rahmen (17, 18) an Ort und Stelle gehalten wird.

## Revendications

1. Machine (10) d'usinage pour parois, en particulier pour des parois en bois ou des parois multicouches et analogues, comprenant une entrée (11) munie d'une ou plusieurs tête(s) de travail (12) et une surface de travail (13) qui doit recevoir une paroi (14) à usiner, ladite entrée (11) et ladite surface de travail (13) étant configurées pour permettre le mouvement de l'une par rapport à l'autre, ladite machine d'usinage pour parois étant **caractérisée en ce que** ladite surface de travail (13) comprend un premier et un second cadre de support et de mouvement (17, 18) opposés, les deux cadres étant munis de moyens de translation et de rotation (19, 20) par rapport à un cadre de base (21) fixe et configurés pour permettre à chaque cadre de support et de mouvement (17, 18) de prendre les configurations suivantes :
- une configuration abaissée sensiblement horizontale permettant d'usiner une paroi (14),
- une configuration inclinée qui fait face à l'autre cadre de support et de mouvement (17, 18) opposé afin de retourner une paroi (14) supportée par ledit premier cadre de support et de mouvement (17) sur ledit second cadre de support et de mouvement (18).

2. Machine selon la revendication 1, **caractérisée en ce que** chacun des deux cadres (17, 18) a sensiblement la forme d'un peigne, avec une barre longitudinale (22, 23) et une pluralité de traverses (24, 25) qui sont fixées à angle droit par rapport à la barre longitudinale respective.

3. Machine selon une ou plusieurs des revendications précédentes, **caractérisée en ce que** lesdits moyens de translation et de rotation (19, 20) fournissent, pour chaque cadre (17, 18) au moins deux unités de translation et de rotation, qui sont appliquées sur les traverses espacées respectives du cadre correspondant.

4. Machine selon une ou plusieurs des revendications précédentes, **caractérisée en ce que** lesdits moyens de translation et de rotation (19, 20) sont intercalés entre une traverse (24, 25) du cadre (17, 18) correspondant et une traverse (26, 27) sous-jacente du cadre de base (21).

5. Machine selon une ou plusieurs des revendications précédentes, **caractérisée en ce que** lesdits moyens de translation et de rotation (19, 20) comprennent un coulisseau (30, 31) qui est agencé de manière à coulisser sur un guide (32, 33) agencé au-dessus de la traverse (26, 27) correspondante du cadre de base (21), la traverse (24, 25) correspondante du cadre de support et de mouvement (17, 18) étant pivotée jusqu'au coulisseau (30, 31).

6. Machine selon les revendications précédentes, **caractérisée en ce que** ledit coulisseau (30, 31) se déplace par rapport à son guide (32, 33) grâce à des moyens de poussée ou de traction.

7. Machine selon une ou plusieurs des revendications précédentes, **caractérisée en ce que** lesdits moyens de poussée ou de traction sont prévus sous la forme d'une chaine de transmission (36, 37), ladite chaine (36, 37) étant couplée au coulisseau (30, 31) par l'intermédiaire d'une équerre (38, 39).

8. Machine selon une ou plusieurs des revendications précédentes, **caractérisée en ce que** ladite chaine (36, 37) est actionnée par un pignon (40, 41) qui est claveté sur un arbre d'entrainement qui s'étend longitudinalement par rapport à la direction d'extension de la surface de travail (13) et actionne simultanément toutes les chaines (36, 37) liées au même cadre (17, 18) grâce à des pignons correspondants.

9. Machine selon une ou plusieurs des revendications précédentes, **caractérisée en ce que** lesdits moyens de translation et de rotation (19, 20) comprennent, pour assurer la rotation, un actionneur linéaire (43, 44) qui est intercalé entre le coulisseau (30, 31) et la traverse correspondante du cadre de support (24, 25).

10. Machine selon une ou plusieurs des revendications précédentes, **caractérisée en ce que** ladite paroi (14) en cours d'usinage est maintenue en position sur les cadres (17, 18) grâce à des butées fixes (45, 46), qui sont fixées respectivement sur les extrémités des traverses (24, 25) des deux cadres (17, 18), et à des butées mobiles (47, 48).
